Europäisches Patentamt

European Patent Office

Office européen des brevets

(19)

(11) Publication number: **0 274 992**

**A1**

## (12) EUROPEAN PATENT APPLICATION

(21) Application number: 87830370.0

(22) Date of filing: 20.10.87

(51) Int. Cl.⁴: **B60S 1/34**

(30) Priority: 17.12.86 IT 5420786 U

(43) Date of publication of application:
20.07.88 Bulletin 88/29

(84) Designated Contracting States:
AT BE CH DE ES FR GB GR IT LI LU NL SE

(71) Applicant: INDUSTRIE MAGNETI MARELLI S.r.l.
Via Adriano 81
I-20128 Milano(IT)

(72) Inventor: Pedani, Giuseppe
Via Cannicci 7
I-53037 San Gimignano (Siena)(IT)

(74) Representative: Buzzi, Franco et al
c/o Jacobacci-Casetta & Perani S.p.A. Via
Alfieri, 17
I-10121 Torino(IT)

(54) Windscreen-wiper device for motor vehicles.

(57) The wiper arm has an articulated-parallelogram configuration (3) defined by a principal arm (3a) articulated to the gear-box (4) about the first pin (6) and fixed for rotation with the toothed pinion (7), a secondary arm (3b) having one end articulated to the gear-box (4) about the second pin (9), and a transverse connecting rod (3c) which pivotably connects the other end of the secondary arm (3b) to the principal arm (3a).

FIG. 2

Xerox Copy Centre

## Windscreen-wiper device for motor vehicles.

The present invention relates to a windscreen-wiper device for motor vehicles, of the type comprising a motorised drive shaft and a wiper arm driven by the drive shaft and carrying a wiper blade.

Known windscreen-wipers of this type generally have the disadvantage that the wiping area covered by the wiper arm is limited to a circular sector of moderate width. This disadvantage is particularly marked in the case of single-arm windscreen wipers, that is, with a single blade-carrying arm whose drive shaft is positioned on the centre line of the glazed surface (windscreen or rear window) of the vehicle, since vast regions around the edges of the wiped sector remain unwiped by the wiper arm, which limits the field of view of the vehicle occupants, sometimes critically.

In order to avoid this disadvantage, it has been suggested that the wiper arm should be driven through a gear box driven by the drive shaft in a reciprocating manner and carrying first and second pins extending parallel to and eccentrically of the drive shaft, a gear concentric with the drive shaft and stationary relative both to it and to the gearbox, a toothed pinion supported by the gear-box for rotation about the first pin, and an idle gear supported by the gear-box for rotation about the second pin and meshing at one side with the stationary gear and at the other with the toothed pinion.

The object of the present invention is to produce a motor-vehicle windscreen-wiper of the type specified above which allows the operating area of the wiper arm to be increased even more.

This object is achieved by means of a windscreen-wiper device for motor vehicles of the type defined above, characterised in that the wiper arm has an articulated-parallelogram configuration defined by a principal arm articulated to the gearbox about the first pin and fixed for rotation with the toothed pinion, a secondary arm having one end articulated to the gear-box about the second pin, and a transverse connecting rod which pivotably connects the other end of the secondary arm to the principal arm.

By virtue of this characteristic, during operation of the device, the wiper blade is moved along an arcuate path of variable radius which enables the wiped area of the window to be increased appreciably.

The principal arm preferably comprises a connecting rod and a shaft pivotably interconnected for pivoting about a third pin parallel to the drive shaft, of which the first is articulated about the second rod and the second is articulated about the transverse connecting rod.

The invention will now be described in detail with reference to the appended drawings, provided purely by way of non-limiting example, in which:

Figure 1 is a partial, schematic, front-elevational view of a motor-vehicle windscreen-wiper device according to the invention, and

Figure 2 is a view similar to Figure 1 of a different arrangement of the windscreen-wiper device.

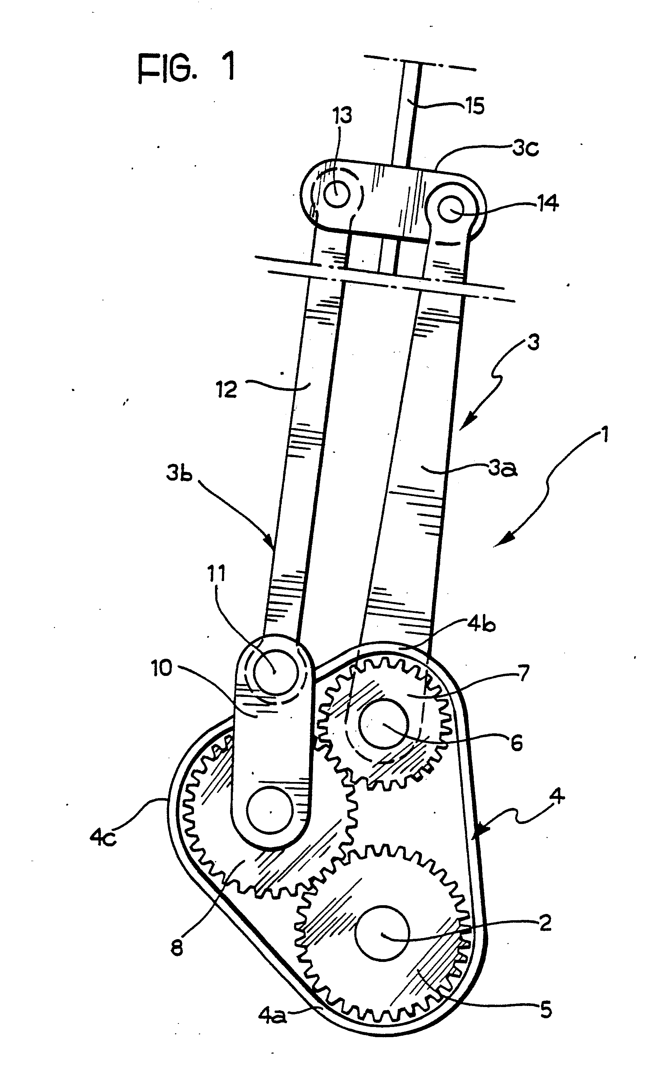

With reference initially to Figure 1, a motor-vehicle windscreen-wiper device generally-indicated 1 is driven by a drive shaft 2 rotated in a reciprocating manner by a conventional electric motor, not illustrated in the drawings.

The drive shaft 2 is coupled to a gear-box 4 so that it can be pivoted reciprocatingly about its own axis.

The gear-box 4 has a generally triangular configuration with two vertices, a lower one 4a and an upper one 4b situated one above the other, and the third vertex 4c arranged at a level intermediate the vertices 4a, 4b.

The drive shaft 2 is situated, in the case of Figure 1, near the lower vertex 4a of the box 4 to which the shaft is fixed for rotation.

The shaft 2 passes coaxially and rotatably through a gear 5 which is stationary relative to the box 4. This gear 5 is conveniently fixed, during assembly of the windscreen-wiper device, to the supporting structure of a vehicle near the base of the window with which the device is associated.

At its upper vertex 4b, the box 4 carries an articulation pin 6, parallel to the drive shaft 2 and on which a coaxial toothed pinion 7 is rotatably mounted. The toothed pinion 7 meshes with an idle gear 8 supported by the gear-box 4 for rotation about a pin 9 situated near the intermediate vertex 4c and also extending parallel to the drive shaft 2. The idle gear 8 is also meshed with the stationary gear 5.

A wiper unit carried by the gear-box 4 is generally indicated 3 and includes a principal arm 3a, a secondary arm 3b and a transverse connecting rod 3c.

The principal arm 3a is articulated at its lower end to the gear-box 4 about the pin 6 and is fixed for rotation with the toothed pinion 7.

The secondary arm 3b consists, in the example illustrated, of a connecting rod 10 and a shaft 12. The connecting rod 10 is articulated at its lower end to the gear-box about the pin 9 on which the idle gear is rotatable, and is articulated at its upper end to the lower end of the shaft 12 about a pin 11 also parallel to the drive shaft 2. The upper end of the shaft 12 is articulated about a pin 13 to one end of the transverse connecting rod 3c, whose opposite end is articulated by means of a pin 14 to the principal arm 3a. The pins 13 and 14 are also parallel to the drive shaft 2.

A wiper blade unit, part of which is schematically indicated 15, is fixed to the connecting rod 3c and includes, in known manner, a support structure carrying a wiper blade, normally of elastomeric material.

It should be noted that, instead of consisting of the connecting rod 10 and the shaft 12, the secondary arm 3b, could consist of a single member articulated at its lower end to the pin 9 and at its upper end to the pin 13.

The wiper unit 3, in practice, has an articulated parallelogram configuration defined by the principal arm 3a, the secondary arm 3b, the connecting member 3c and by the line joining the axes of the pins 6 and 9.

During operation of the windscreen-wiper device 1, the wiper unit 3 is moved with a reciprocating, rotary motion, together with the gear-box 4, about the axis of the drive shaft 2, while, at the same time, the principal and secondary arms 3a and 3b move angularly about the axes of their respective pins 6 and 9 due to the meshing of the idle gear 8 on one side with the stationary gear 5 and on the other with the toothed pinion 7.

Thus, in practice, the wiper blade 15 is moved over the surface of the window along an arcuate path whose radius is not constant so that, for a given rotary movement of the drive shaft 2, an appreciably greater area is wiped than can be achieved with conventional windscreen-wipers.

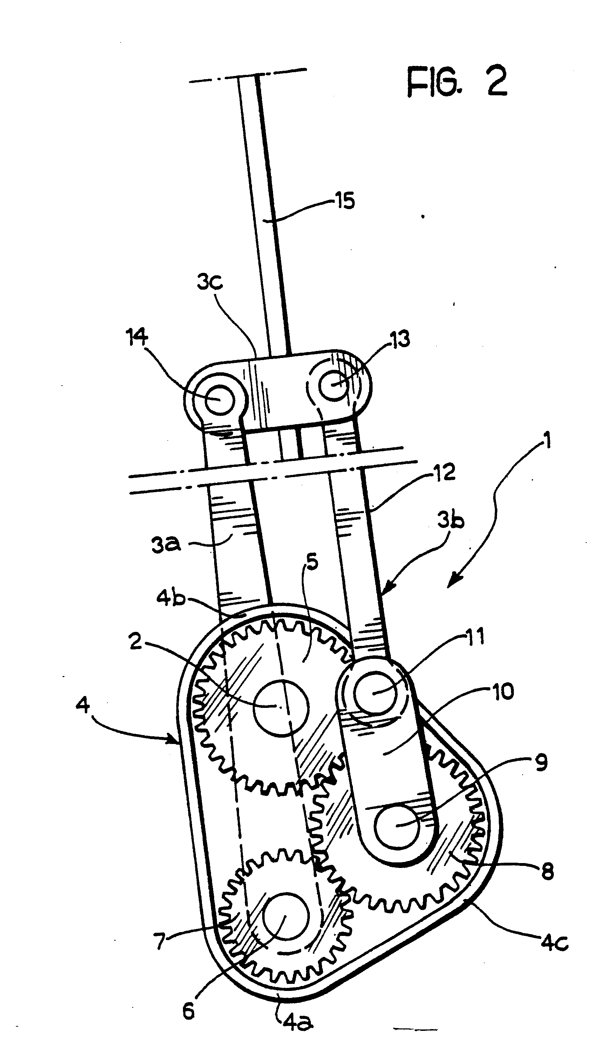

The configuration of the windscreen-wiper device 1 illustrated in Figure 2 is generally similar to that described above with reference to Figure 1, and identical or similar parts are indicated by the same reference numerals. In practice, the only difference in the second configuration lies in the fact that the positions of the drive shaft 2 and of the pin 6, on which the toothed pinion with the principal arm 3a is rotatable, are reversed; in this case, in fact, the drive shaft 2 and the stationary gear 5 are situated near the upper vertex 4b of the gear-box 4 while the pin 6 with the toothed pinion 7 is located near the lower vertex 4a.

The operation of the device and its effects are identical to the preceding case, except for the fact that the general curvature of the area wiped by the wiper blade 3 is more accentuated with the device of Figure 1 and less accentuated with the device of Figure 2.

It should be noted that, in both the embodiments of the invention, if the transmission ratio between the stationary gear 5 and the idle gear 8 is equal to one, as illustrated in the drawings, the arms 3a and 3b make up a standard parallelogram.

On the other hand, if the transmission ratio is other than 1, a parallogram with one side of variable length is produced which changes the geometry and consequently the relative movement of the wiper blade 15. In effect, if a transmission ratio between the gears 5 and 8 is adopted such that the connecting rod 10 pivots up to 360° relative to a fixed reference on the supporting structure of the vehicle, and if the wiper balde 15 is linked to the auxiliary arm 3b, further increases or reductions in the radius of cleaning can be obtained.

## Claims

1. A windscreen-wiper device for motor vehicles, comprising a motorised drive shaft and a wiper arm carrying a wiper blade and driven by a gear-box (4) driven by the drive shaft (2) with a reciprocating rotary motion and carrying first and second pins (6, 9) extending parallel to and eccentrically of the drive shaft (2), a gear (5) concentric with the drive shaft (2) and stationary relative thereto and to the gear-box (4), a toothed pinion (7) supported by the gear-box (4) for rotation about the first pin (6), and an idle gear (8) supported by the gear-box (4) for rotation about the second pin (9) and meshing at one side with the stationary gear (5) and at the other with the toothed pinion (7), characterised in that the wiper arm has an articulated-parallelogram configuration (3) defined by a principal arm (3a) articulated to the gear-box (4) about the first pin (6) and fixed for rotation with the toothed pinion (7), a secondary arm (3b) having one end articulated to the gear-box (4) about the second pin (9), and a transverse connecting rod (3c) which pivotably connects the other end of the secondary arm (3b) to the principal arm (3a).

2. A device according to Claim 1, characterised in that the secondary arm (3b) comprises a connecting rod (10) and a shaft (12) pivotally connected together about a third pin (11) parallel to the drive shaft (2), of which the first is articulated about the second pin (9) and the second is articulated to the transverse connecting rod (3c).

3. A device according to Claim 1 or Claim 2, characterised in that the transmission ratio between the stationary gear (5) and the idle gear (8) is 1.

4. A device according to Claim 1 or Claim 2, characterised in that the transmission ratio between the stationary gear (5) and the idle gear (8) is other than 1.

5. A device according to Claim 1 or Claim 2, characterised in that the gear-box (4) has a generally-triangular configuration with the drive shaft (2), the first pin (6) and the second pin (9) arranged near its vertices (4a, 4b, 4c).

6. A device according to Claim 5, characterised in that two vertices (4a, 4b) of the gear-box (4) are situated one above the other, and in that the first pin (6) is situated at the upper vertex and the drive shaft (2) is at the lower vertex (4a).

7. A device according to Claim 5, characterised in that the two vertices (4a, 4b) of the gear-box (4) are situated one above the other, and in that the drive shaft (2) is situated at the upper vertex (4b) and the first pin (6) is at the lower vertex (4a).

# FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 045 092 (DAIMLER-BENZ)<br>* page 4, line 19 - page 5, line 9 *<br>--- | 1,4 | B 60 S 1/34 |
| A | US-A-3 688 334 (PETERSON)<br>* column 3, line 25 - column 4, line 46; figures 1-3 *<br>--- | 1 | |
| A | GB-A-1 376 240 (SWF)<br>* figure *<br>----- | 1 | |

**TECHNICAL FIELDS SEARCHED (Int. Cl.4)**

B 60 S 1/00

The present search report has been drawn up for all claims

| Place of search | Date of completion of the search | Examiner |
|---|---|---|
| BERLIN | 27-03-1988 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)